# EUROPÄISCHE PATENTSCHRIFT

(11) **EP 0 655 175 B1**
(45) Veröffentlichungstag und Bekanntmachung des Hinweises auf die Patenterteilung: **07.01.1999**
(21) Anmeldenummer: 92909576.8
(22) Anmeldetag: 28.04.1992
(51) Int. Cl.: H02P 5/40

(54) **VERFAHREN ZUM BETREIBEN VON PERMANENTERREGTEN ELEKTRISCH EINPHASIGEN WECHSELSTROMMASCHINEN**
PROCESS FOR OPERATING PERMANENTLY EXCITED SINGLE-PHASE ALTERNATING CURRENT MACHINES
PROCEDE D'EXPLOITATION DE MACHINES ELECTRIQUES A COURANT ALTERNATIF MONOPHASE EXCITEES EN PERMANENCE

(30) Priorität: 29.04.1991 AT 892/91
(43) Veröffentlichungstag der Anmeldung: 31.05.1995
(73) Patentinhaber: Voith Turbo GmbH & Co. KG, 89522 Heidenheim (DE)
(72) Erfinder: FEHRINGER, Rudolf, A-1100 Wien (AT)
(74) Vertreter: Rieberer, Stefan, Dipl.-Ing.
(86) Internationale Anmeldenummer: AT9200060
(87) Internationale Veröffentlichungsnummer: WO9220142

(56) Entgegenhaltungen:
- EP-A- 0 295 710
- WO-A-88/06375
- PATENT ABSTRACTS OF JAPAN, Band 003, Nr. 71 (E-118) 20. Juni 1979 & JP,A,54 050 813 ( SANYO ELECTRIC CO LTD ) 21. April 1979
- PATENT ABSTRACTS OF JAPAN, Band 10, Nr. 197 (E-418) 10. Juli 1986 & JP,A,61 039 885 (YASKAWA ELECTRIC MFG CO. LTD) 26. Februar 1986
- PATENT ABSTRACTS OF JAPAN, Band 009, Nr. 280 (E-356) 8. November 1985 & JP,A,60 121 987 (MITSUBISHI DENKI K.K.) 29. Juni 1985
- IEEE TRANSACTIONS ON ENERGY CONVERSION, Band 5, Nr. 3, September 1990, New York, US; D.D. SUDHOFF: 'Operating modes of the brushless DC motor with a 120 Inverter', Seiten 558-564
- s

## Beschreibung

Die Erfindung betrifft ein Verfahren zum Steuern einer permanenterregten, elektrisch einphasigen Transversalflußmaschine mittels eines Umrichters und eine Schaltungsanordnung zur Durchführung dieses Verfahrens.

Ein Ausführungsbeispiel für eine permanenterregte elektrisch einphasige Wechselstrommaschine ist die Transversalflußmaschine. Diese Maschinen sind permanenterregte Synchronmaschinen mit einer hohen Kraftdichte bei sehr geringen Verlusten der Ankerwicklung. Von Wechselrichtern gespeist, werden diese Maschinen in'naher Zukunft in vielen verschiedenen Anwendungsbereichen - wie z. B. Direktantnebe höchster Kraftdichte, Traktionsantriebe mit der richtigen Aufteilung des Antriebsmomentes auf verschiedene Antriebsgruppen und hohem Wirkungsgrad und Linearantriebe den Gleichstromantrieb mit Sicherheit verdrängen.

Das Prinzip der Transversalflußmaschine beruht darauf, daß aufgrund der speziellen Ausbildung des magnetischen Kreises der Nutzfluß quer zur Bewegungsrichtung verläuft, Die dadurch möglichen Bauformen der Ankerwicklungen Ringspulen in Umfangsrichtung ermöglichen eine hohe Kraftdichte mit einer kleinen Ankerdurchflutung bei einer kleinen Polteilung. Dies hat sehr niedrige Verluste zur Folge, was den Wirkungsgrad steigert und die Kühlung der Maschine wesentlich vereinfacht Einen weiteren Vorteil bietet die Transversalflußmaschine im Feldschwächebereich, wo mit konstant zugeführter Leistung ein großer Drehzahlbereich abgedeckt werden kann. Unter Feldschwächebereich einer Transversalflußmaschine ist jener Bereich zu verstehen, bei welchem die innere Spannung der Maschine die Zwischenkreisspannung übersteigt.

In der Offenlegungsschrift DE 37 05 089 A1 wird ein Schaltungskonzept für die Energieversorgung einer zweisträngigen Transversalflußmaschine beschrieben. Hierbei besteht der Wechselrichter aus zwei 4-Quadrantenstellern. Der Wechselrichter wird zur Spannungsanpassung im Pulsbetrieb getaktet. Die Gleichspannung kann also über einen ungesteuerten Gleichrichter aus dem dreiphasigen Netz gewonnen werden. Diese Gleichspannung stellt den Maximalwert der verfügbaren Spannung dar. Ist eine beschleunigte Kommutierung, unter Vermeidung des Pulsbetriebes gewünscht, so muß die Schaltung erweitert werden. Ein Gleichspannungs-Stellglied regelt die wirksame Spannung in der Arbeitsphase. Der Hochsetzsteller bildet die Kommutierungsspannung, die über das Gleichspannungs-Stellglied an den Wechselrichter gelegt wird. Der Hochsetzsteller kann dabei, in Abhängigkeit von verschiedenen Parametern wie z. B von Drehzahl oder Laststrom, die Kommutierungsspannung anpassen.

Der Nachteil dieses Schaltungskonzeptes besteht dann, daß eine wirtschaftliche Auslegung des Umrichters sowie eine optimale Anpassung an die Bedürfnisse des Anwenders, unter Ausschöpfung aller Vorteile der Transversalflußmaschine, nicht möglich ist.

In der US 4 333 042 ist eine Steuerungseinrichtung für eine Wechselstrommaschine beschrieben, bei welcher in einem sogenannten "A"-Bereich (Grunddrehzahlbereich) eine sinusförmige Spannung an die Klemmen der Maschine angelegt wird und in einem sogenannten "B"-Bereich (Betrieb mit konstanter Leistung) eine rechteckförmige Spannung an die Klemmen angelegt wird. Der Übergang zwischen beiden Bereichen geschieht kontinuierlich durch Anlegen einer Spannung, welche sinusförmige und rechteckförmige Anteile enthält.

Dadurch kann zwar eine wirksame Ausnutzung der zur Verfügung stehenden Zwischenkreisspannung erreicht werden, jedoch treten dabei vergleichsweise hohe Strangströme auf.

Diese Steuerungseinrichtung ist daher nicht auf Transversalflußmaschinen anwendbar.

In den Dokumenten JP-A 54 050 813 und JP-A 61 039 885 sind jeweils Betriebsverfahren beschrieben, welche entweder mit einer Rechtecks- oder mit einer Sinuskurvenform, entsprechend dem Arbeitspunkt der Maschine, arbeiten, wobei die JP-A 61 039 885 und die JP-A 54 050 813 einzuprägende Ströme offenbaren.

In der EP-A 0 295 710 ist eine Synchronmaschine, die mittels eines Drehgebersbetrieben wird, beschrieben. Die Zeit, in der die Maschine die Kurvenform vorgibt, das sind die sinusförmigen Anteile der Kurvenform wird zur Messung des Betriebszustandes der Maschine benutzt. Daraus wird dann die Form der vom Wechselrichter zu liefernden Rechteckspannung berechnet.

Der Erfindung liegt somit die Aufgabe zugrunde, ein Verfahren zum Betreiben einer permanenterregten, elektrisch einphasigen Transversalflußmaschine zu schaffen, welches sowohl eine optimale Ausnutzung der Maschine sowie eine wirtschaftliche Auslegung des Umrichters ermöglicht. Weiters ist es eine Aufgabe der Erfindung, eine Schaltungsanordnung zur Durchführung des Verfahrens zu schaffen.

Diese Aufgaben werden durch die Merkmale der Ansprüche 1 und 2 gelöst.

Mit der Erfindung dieses Verfahrens ist es erstmals möglich einen, nach wirtschaftlichen Gesichtspunkten ausgelegten Umrichter zur Speisung einer permanenterregten, elektrisch einphasigen Transversalflußmaschine einzusetzen und dabei sämtliche Vorteile dieser Maschine für die verschiedensten Anwendungsbereiche zu nutzen. Durch die Einprägung dieser speziellen Spannungsform, wird im Übersteuerungsbereich der Maschine, der Effektivwert des Strangstromes der Maschine auf ein Minimum begrenzt und ein maximales Drehmoment erreicht. Dies geschieht durch Ausnutzung der Induktivität der Maschine als Energiespeicher.

Bei einer speziellen Ausgestaltung der Erfindung sind ein Meßwert für den Drehwinkel der Transversalflußmaschine, eine Kreisfrequenz, welche ein differenzierendes Regelkreisglied aus dem Drehwinkel bildet, ein vorgewähltens Drehmoment und eine Zwischenkreis-Gleichspannung jeweils einer ersten und einer zweiten Steuereinrichtung einspeisbar, die erste Steuereinrichtung errechnet Umschaltzeitpunkte für eine Umschaltung auf eine Zwischenkreis-Gleichspannung je nach Polarität der Spannung innerhalb der Halbperiode und gibt diese Umschaltzeitpunkte an einen Steuersatz des Umrichters weiter, und die zweite Steuereinrichtung bildet eine Sollklemmenspannung und speist damit den Steuersatz des Umrichters. Der Vorteil dieser speziellen Ausgestaltung besteht darin, daß der Verlauf der Klemmenspannung der Maschine, durch das Heranziehen des inversen Motormodelles zur Spannungsbildung, in Abhängigkeit vom vorgewählten Moment, optimiert wird. Dies ermöglicht eine exakte Anpassung der Maschine an die Erfordernisse des jeweiligen Einsatzbereiches.

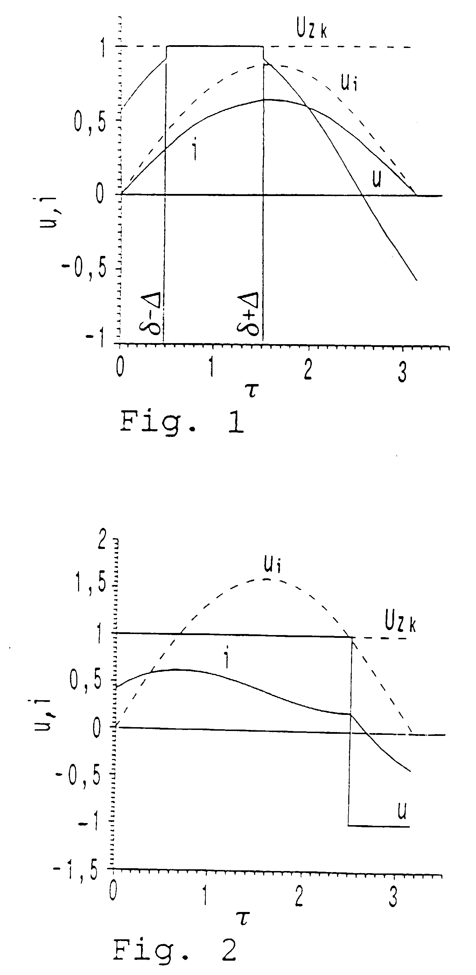

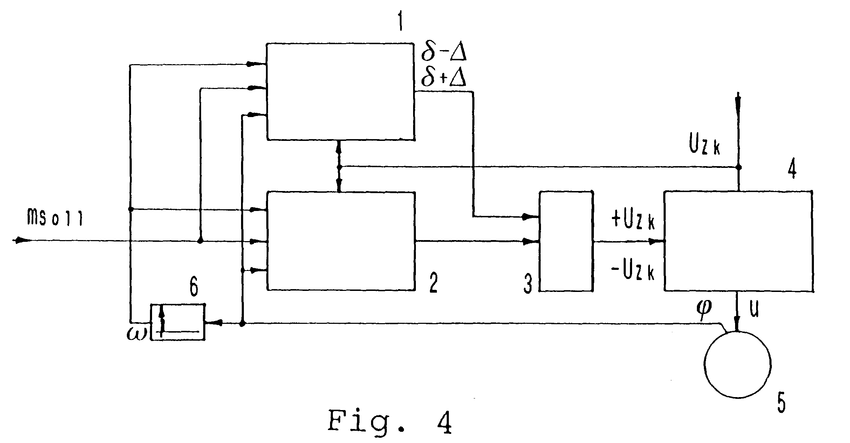

In Fig. 1 bis 3 sind die verschiedenen einzuprägenden Spannungsformen und in Fig. 4 ist ein Ausführungsbeispiel der Erfindung in Form eines Blockschaltbildes dargestellt.

Jeweils das gleiche Koordinatensystem kennzeichnet Fig. 1 bis 3. Auf der Abszisse ist jeweils die normierte Zeit, die sich aus dem Drehwinkel multipliziert mit der Polpaarzahl p errechnet, aufgetragen. Die Ordinate weist jeweils eine normierte Skala auf, die von -1,00 bzw. -1,50 über 0 bis +1,00 bzw. +2,00 reicht, und sowohl für die eingeprägte Klemmenspannung u als auch für den Strangstrom i und die innere Spannung der Maschine uᵢ gilt. Der Wert für die Zwischenkreis-Gleichspannung U_{Zk} liegt jeweils bei +1.00. Es ist jeweils nur die positive Halbwelle dargestellt, da für die negative Halbwelle sinngemäß die gleichen Kurvenverläufe gelten.

Fig. 1 zeigt den Übersteuerungsbereich der Maschine. Hier ist die eingeprägte Klemmenspannung u, welche sinusförmige Anteile und einen Bereich zwischen den Umschaltzeitpunkten δ-Δ und δ+Δ wo die Spannung die Zwischenkreis-Gleichspannung U_{Zk} annimmt, dargestellt. Wesentlich dabei ist, daß die Klemmenspannung u nicht einfach in die Zwischenkreis-Gleichspannung U_{Zk} läuft, sondern zum definierten Umschaltzeitpunkt δ-Δ den Maximalwert anzunehmen hat. Der hier ersichtliche Strangstrom i wird dadurch auf ein Minimum beschränkt.

Die in Fig. 2 dargestellte Klemmenspannung u gilt für den Feldschwächebereich der Maschine. Der optimale Verlauf der Klemmenspannung u ist rechteckförmig. Durch die Minimierung des Strangstromes i in diesem Betriebsbereich der Maschine ist es möglich, auch den Umrichter optimal auszulegen.

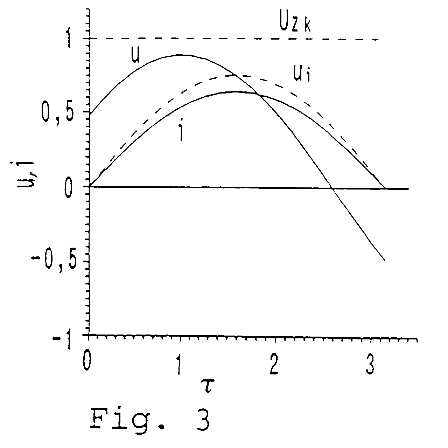

Die Klemmenspannung u in Fig. 3 ist sinusförmig und die beste Spannungsform für den Grunddrehzahlbereich der Maschine. Damit ist auch in diesem Betriebsbereich der Maschine eine Minimierung des Strangstromes möglich, was ein sehr günstiges Verhältnis zwischen Strangstrom und Drehmoment bewirkt.

In Fig. 4 ist das Blockschaltbild eines Ausführungsbeispieles ersichtlich, wobei die Transversalflußmaschine 5 den Meßwert Drehwinkel liefert. Dieser Meßwert wird in einem differenzierenden Regelkreisglied 6 in die Kreisfrequenz umgewandelt. Der Drehwinkel ϕ, die Kreisfrequenz ω, das vorgewählte Moment mₛₒₗₗ und die Zwischenkreis-Gleichspannung U_{Zk} werden jeweils in die erste und die zweite Steuereinrichtuno 1, 2 eingespeist. Die erste Steuereinrichtung 1 errechnet dann den Umschaltzeitpunkt δ-Δ bzw. δ+Δ für die Zwischenkreis-Gleichspannung -U_{Zk} bzw. +U_{Zk} je nach der Polarität der Spannung innerhalb der Halbperiode. Diese Umschaltzeitpunkte δ-Δ, δ+Δ werden dann an den Steuersatz 3 des Umrichters 4 weitergeleitet. Die zweite Steuereinrichtung 2 führt die Spannungsbildung mittels einer Berechnung, unter Heranziehung des inversen Motormodelles und in Abhängigkeit des vorgewählten Drehmomentes mₛₒₗₗ, durch und speist damit ebenfalls den Steuersatz 3 des Umrichters 4.

## Patentansprüche

1. Verfahren zum Steuern einer permanenterregten, elektrisch einphasigen Transversalflußmaschine mittels eines Umrichters, **dadurch gekennzeichnet,** daß vom Umrichter eine Klemmenspannung (u) eingeprägt wird. welche aus dem Drehwinkel (ϕ) der Transversalflußmaschine, der Kreisfrequenz (ω), einem jeweils vorgewählten Drehmoment (mₛₒₗₗ) und einer verfügbaren Zwischenkreis-Gleichspannung (+U_{ZK} bzw. -U_{ZK}) errechnet wird, wobei die Klemmenspannung (u) sinusförmige Anteile und Bereiche zwischen errechneten ersten und zweiten Umschaltzeitpunkten (δ-Δ, δ+Δ) aufweist, innerhalb derer die Klemmenspannung (u) den Wert der Zwischenkreis-Gleichspannung (U_{ZK}) annimmt, um eine Minimierung des Effektivwertes des Strangstromes (i) der Transversalflußmaschine bei einem maximalen Drehmoment zu erreichen.

2. Schaltungsanordnung zur Durchführung des Verfahrens nach Anspruch 1, **dadurch gekennzeichnet,** daß ein Meßwert für den Drehwinkel (ϕ) der Transversalflußmaschine (5), die Kreisfrequenz (ω), welche ein differenzierendes Regelkreisglied (6) aus dem Drehwinkel (ϕ) bildet, das jeweils vorgewählte Drehmoment (mₛₒₗₗ) und die verfügbare Zwischenkreis-Gleichspannung (U_{ZK}) jeweils einer ersten und einer zweiten Steuereinrichtung (1, 2) einspeisbar sind, daß die erste Steuereinrichtung (1) Umschaltzeitpunkte (δ-Δ, δ+Δ) für eine Umschaltung auf die Zwischenkreis-Gleichspannung (+U_{ZK} bzw. -U_{ZK}) je nach Polarität der Spannung innerhalb der Halbperiode errechnet und diese Umschaltzeitpunkte (δ-Δ, δ+Δ) an einen Steuersatz (3) des Umrichters (4) weitergibt, und daß die zweite Steuereinrichtung (2) eine Sollklemmenspannung bildet und damit den Steuersatz (3) des Umrichters (4) speist.

## Claims

1. Method for controlling a magnetoelectric single-phase transverse-flux motor by means of a converter, characterized in that the converter impresses a terminal voltage (u) which is computed from the rotational angle (ϕ) of the transverse-flux motor, the angular frequency (ω), an individually preselected torque (mₛₒₗₗ) and an available intermediate circuit DC voltage (+U_{ZK} or -U_{ZK}), the terminal voltage (u) having sinusoidal components and regions between computed first and second switching points (δ-Δ, δ+Δ) within which the terminal voltage (u) assumes the value of the intermediate circuit DC voltage (U_{ZK}) in order to minimize the root-mean-square value of the phase current (i) of the transverse-flux motor at maximum torque.

2. Circuit arrangement for carrying out the method according to Claim 1, characterized in that a measured value for the rotational angle (ϕ) of the transverse-flux motor (5), the angular frequency (ω) which forms a differentiating control system element (6) from the rotational angle (ϕ), the individually preselected torque (mₛₒₗₗ) and the available intermediate circuit DC voltage (U_{ZK}) are able to be respectively fed to a first and second control device (1, 2), in that the first control device (1) computes switching points (δ-Δ, δ+Δ) for changeover to the intermediate circuit DC voltage (+U_{Zk} or -U_{Zk}) according to the polarity of the voltage within the half-period and retransmits these switching points (δ-Δ, δ+Δ) to a control set (3) of the converter (4), and in that the second control device (2) forms a required terminal voltage and feeds it to the control set (3) of the converter (4).

## Revendications

1. Procédé pour commander une machine à flux transversal monophasée et excitée en permanence au moyen d'un changeur de fréquence, caractérisé en ce que le changeur de fréquence applique une tension aux bornes (u) calculée à partir de l'angle de rotation (ϕ) de la machine à flux transversal, de la fréquence angulaire (ω), d'un couple respectivement présélectionné (mₛₒₗₗ) et d'une tension continue de circuit intermédiaire disponible (+U_{Zk} ou -U_{Zk}), la tension aux bornes (u) présentant des composantes sinusoïdales et des zones entre les premier et deuxième instants de commutation calculés (δ-Δ, δ+Δ) à l'intérieur desquelles la tension aux bornes (u) adopte la valeur de la tension continue de circuit intermédiaire afin d'atteindre une minimisation de la valeur effective du courant par phase d'enroulement (i) de la machine à flux transversal à un couple maximal.

2. Mode de couplage pour réaliser le procédé selon la revendication 1, caractérisé en ce qu'une valeur mesurée pour l'angle de rotation (ϕ) de la machine à flux transversal (5), la fréquence angulaire (ω) formée par un élément différenciateur du circuit de réglage (6) à partir de l'angle de rotation (ϕ), le couple respectivement présélectionné (mₛₒₗₗ) et la tension continue de circuit intermédiaire disponible (U_{Zk}), peuvent être conférés respectivement à un premier et un deuxième dispositifs de commande (1, 2), en ce que le premier dispositif de commande (1) calcule des instants de commutation (δ-Δ, δ+Δ) pour une commutation sur la tension continue de circuit intermédiaire (+U_{Zk} ou -U_{Zk}) en fonction de la polarité de la tension à l'intérieur de la demi-période et transmet ces instants de commutation (δ-Δ, δ+Δ) à un élément de déclenchement (3) du changeur de fréquence (4), et en ce que le deuxième dispositif de commande (2) crée une tension aux bornes de consigne et l'utilise pour alimenter l'élément de déclenchement (3) du changeur de fréquence (4).
